# EUROPEAN PATENT APPLICATION

(11) **EP 4 659 879 A1**
(43) Date of publication of application: **10.12.2025**
(21) Application number: 24180253.7
(22) Date of filing: 05.06.2024
(51) Int. Cl.: B22F 10/28, B22F 10/37, B22F 10/85, B22F 12/90, B29C 64/153, B29C 64/393, B33Y 30/00, B33Y 50/02, G01N 21/88, G06T 7/00

(54) **METHOD AND A SYSTEM FOR ANALYSING AN ADDITIVE MANUFACTURING BUILDING PROCESS OF A THREE-DIMENSIONAL PRODUCT**

(71) Applicant: Euler ehf, 220 Hafnarfjördur (IS)
(72) Inventor: Eiriksson, Eythor Runar, 220 Hafnarfjördur (IS); Eiriksson, Eirikur Ragnar, 220 Hafnarfjördur (IS); Einarsdottir, Hildur, 220 Hafnarfjördur (IS); Kjartansson, Valtyr Örn, 220 Hafnarfjördur (IS)
(74) Representative: HKW Intellectual Property PartG mbB

(57) **Abstract**

This invention relates to a method and a system for analyzing an additive manufacturing (AM) building process of a three-dimensional (3D) product, where the building process comprises alternatively distributing a material on a substrate by a recoating mechanism and subsequently building a layer by means of fusing a portion of the material by a fusing device according to a planned geometry of the 3D product, the method comprising:
A. obtaining image data for each build layer of the 3D product in a high-resolution format, where the image data comprise image data of the distributed material before fusing the portion of the material and image data after fusing the portion of the material, where each build layer of all the acquired image data are uniquely identified with a unique identification (ID) code and stored in a high-resolution format,
B. generating a video stream from the image,
C. storing the generated video stream, and
D. displaying the stored video stream,

wherein steps A. to D. are repeated during the building process where the image data for the most recent build layer or layers are added to the video stream while the building process takes place, where the method further comprises
▪ receiving an image selection command from a user from the video stream displayed for the user,
▪ identifying in response to the image selection command, the unique ID code of the image selected from the video stream, and

utilizing the identified unique ID code in extracting and presenting the stored image data in a high-resolution format.

## Description

### FIELD OF THE INVENTION

The present invention relates to a method and a system for analyzing an additive manufacturing (AM) building process of a three-dimensional (3D) product, where the building process comprises alternatively distributing a material on a substrate by a recoating mechanism and subsequently building a layer by means of fusing a portion of the material by a fusing device according to a planned geometry of the 3D product.

### BACKGROUND OF THE INVENTION

Additive manufacturing (AM) is the general term for those technologies that successively join material in an additive manner to create physical objects as specified by 3D model data. AM has paved its way during the last decades, offering significantly more design freedom compared to subtractive methods. These technologies are presently used for various applications in the engineering industry such as the aerospace, automotive industry as well as other areas of society, such as medicine, education, architecture, toys and entertainment.

Metal AM has disruptive potential within several industries. In particular the aviation industry, where multi component assemblies can be combined into a single part. Industrial companies have documented 20:1 component reduction which results in a manufacturing savings of up to $3M per airplane. In addition, they document a 25% fuel efficiency and 25% lightweighting of components enabled by the technology. This has therefore significant financial and environmental impact.

Despite these benefits, the lack of quality assurance solutions is hindering widespread adoption of the technology. As these are heavily regulated industries, the need for a process and quality monitoring solution is substantial. Traditional measurement methods simply do not exist due to the complex geometrical freedom offered.

There are seven types of additive manufacturing (AM) processes defined by the ISO/ASTM 52900:2021 standard, one of which is Powder Bed Fusion (PBF). Within this category, a common method is Laser Powder Bed Fusion (LPBF). A typical LPBF building device or a printer uses a high-power laser in a very small point, to melt powder which is spread out by a powder distribution/coating mechanism. The laser profile is drawn on the flat powder surface using a XY galvanometer scanning mirror system and necessary optics to focus the laser beam uniformly across the build plane. This process continues in a layer wise manner until the full component has been created. This process commonly takes several days up to weeks, depending on the volume of the physical object or the amount of material to be fused to print the physical object.

Existing solutions for monitoring of AM processes are mainly focused on acquiring images from a camera installed on the printer, with an unobstructed view of the build area. The images are then stored in a folder on a dedicated computer where an operator can review the captured images. Commonly, two images or image pairs are captured for each layer that is produced. First an image of the powder spread is saved before the laser starts its melting procedure. After the layer has finished melting the layer then a second image is taken. These are stored in separate folders, labeled with the corresponding layer number.

Based on the above, a 3D product can contain thousands of such image pairs that are stored and configured to be viewed one by one when monitoring the building process after it has been completed. This is obviously a very tedious and a user-unfriendly way of monitoring such a building process. Moreover, with this method a failed 3D product can only be identified after it has been built.

### SUMMARY OF THE INVENTION

It is an object of the invention to overcome the above-mentioned problem that enables a user to monitor the building process of a 3D product, while the building process takes place, enabling early stopping of a failed or build that is likely to fail, which saves a significant amount of down time. This is of a particular relevance when printing multiple parts in the same build because a single misprinted/defective component can affect the others around it and compromise the entire build. Early detection of this occurring thus saves the rest of the entire build if e.g. a user is alerted. The user could as an example then manually delete the defective part from the building instructions, or the defective part could be automatically deleted, thus saving the rest of the build.

In general, the invention preferably seeks to mitigate, alleviate or eliminate one or more of the above-mentioned disadvantages of the prior art singly or in any combination. In particular, it may be seen as an object of embodiments of the present invention to provide a method and a system that solves the above-mentioned problems, or other problems.

To better address one or more of these concerns, in a first aspect of the invention a method is provided for analyzing an additive manufacturing (AM) building process of a three-dimensional (3D) product, where the building process comprises alternatively distributing a material on a substrate by a recoating mechanism and subsequently building a layer by means of fusing a portion of the material by a fusing device according to a planned geometry of the 3D product, the method comprising:
A. obtaining image data for each build layer of the 3D product in a high-resolution format, where the image data comprise image data of the distributed material before fusing the portion of the material and image data after fusing the portion of the material, where each build layer of all the acquired image data are uniquely identified with a unique identification (ID) code and stored in a high-resolution format,
B. generating a video stream from the image,
C. storing the generated video stream, and
D. displaying the stored video stream,
wherein steps A. to D. are repeated during the building process where the image data for the most recent build layer or layers are added to the video stream while the building process takes place, where the method further comprises:
▪ receiving an image selection command from a user from the video stream displayed for the user,
▪ identifying in response to the image selection command, the unique ID code of the image selected from the video stream, and
▪ utilizing the identified unique ID code in extracting and presenting the stored image data in a high-resolution format.

A method is thus provided that allows a user to monitor the building process while it is taking place where new build layer images are continuously added to the video stream when acquiring new images during build (behind the scenes).

In an embodiment, the user may slide the video stream back and forth in order to navigate back and forth between build layers like a video-scrubbing while the image data for each build layers where the sliding occurs are displayed, i.e. the image data before fusing the portion of the material and image data after fusing the portion of the material are shown, where the displayed image data during the sliding are in an embodiment displayed in a low-resolution format. If the user as an example identifies a potential failure in a given build layer or layers during the sliding, he can take a closer look at the particular layer by selecting that particular build layer. The image selection command may in an embodiment be triggered for the build layer position within the video stream where the sliding of the video stream is terminated, e.g. where the user releases his finger from a touch screen. In response to the selection, the image data for the build layer where the selection command took place is displayed in a high-resolution format. In that way, the user can take a closer look at the image data pair for the selected build layer. In that way, the user may stop the building process early enough before a failure in the building process becomes too severe.

In an embodiment, the generated video stream is generated in a low-resolution and/or compressed format. The step of generating the video stream in the low-resolution and/or compressed format may in one embodiment comprise compressing the obtained image data into a compressed format and accumulating together the image data in the compressed format. In another embodiment, the generating of the video stream in the low-resolution format comprises accumulating together the image data to form a first set of video stream in a high-resolution format and decoding the video stream in the high-resolution format into said video stream in the low-resolution format. This reduces the need for constant downloading of high resolution data, but in the absence of such a low-resolution and/or compressed format the size of the video stream might easily be within GB range which would require enormous processing power. Thus, having the video stream in said low-resolution and/or compressed format, a general computing device, laptop, portable device may be utilized, where the video stream may be stored in the user's browser memory.

In an embodiment, the generated video stream comprises a first video stream of the image data of the distributed material before fusing the portion of the material and a second video stream of the image data of the built layer, wherein the step of displaying comprises displaying the first and the second video streams parallel and simultaneously such that each displayed image frame at any instant of time displays the image corresponding to the same build layer.

In a second aspect of the invention, a system is provided for analyzing an additive manufacturing (AD) building process of a three-dimensional (3D) product, where the building process comprises alternatively distributing a material on a substrate by a recoating mechanism and subsequently building a layer by means of fusing a portion of the material by a fusing device according to a planned geometry of the 3D product, the system comprising:
A. an imaging device for generating a image data for each build layer of the 3D product in a high-resolution format, where the image data comprise image data of the distributed material before fusing the portion of the material and image data after fusing the portion of the material, where each build layer of all the acquired image data are uniquely identified with a unique identification (ID),
B. a first storage device for storing the image data in a high-resolution format,
C. a video generator comprising a processor for processing the obtained image data and generate a video stream,
D. a second storage device for storing the generated video stream,
E. a display device for displaying the stored video stream,
wherein steps A. to E. are continuously repeated during the building process where the image data for the most recent build layer are added to the video stream while the building process takes place, where the system further comprises:
▪ an image selection mechanism for receiving an image selection command from a user from the video stream displayed for the user,
▪ an image identifier for identifying, in response to the image selection command, the unique ID code of the image selected from the video stream, and
▪ a processing unit for utilizing the identified unique ID code in extracting the image data from the first storage device and displaying the extracted image data in a high-resolution format.

In an embodiment, the video generator is configured to generate the video stream in a low-resolution and/or compressed format, where the video stream may be stored in the user's browser memory. The generated and stored video stream comprises in an embodiment a first video stream of the image data of the distributed material before fusing the portion of the material and a second video stream of the image data of the built layer, wherein the display device is configured to display the first and the second video streams parallel and simultaneously such that each displayed image frame at any instant of time displays the image corresponding to the same build layer, i.e. image data of the distributed material before fusing the portion of the material and image data after fusing the portion of the material of that particular build layer.

In an embodiment, the image selection mechanism comprises a slider device, e.g. mouse or touch button function, configured to be operated by a user for allowing the user to slide the video stream back and forth like in a video-scrubbing in order to navigate back and forth between build layers, where the extracted image data comprises the image data for the build layer position within the video stream where the slider device is released by the user.

In an embodiment, the second storage device comprises the user device memory, but the first and the second storage device may be the same storage device.

In general, the various aspects of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
Figure 1 depicts a flowchart of a method according to the present invention for analyzing an additive manufacturing (AM) building process of a three-dimensional (3D) product,
Figure 2 illustrates graphically an example where a video stream of the build is shown,
Figure 3 illustrates graphically where the user has scrolled back to a previous build layer,
Figure 4 illustrates graphically where the user has released the touch screen and in that way made an image selection command, and
Figure 5 shows a block diagram of a system according to the present invention.

### DESCRIPTION OF EMBODIMENTS

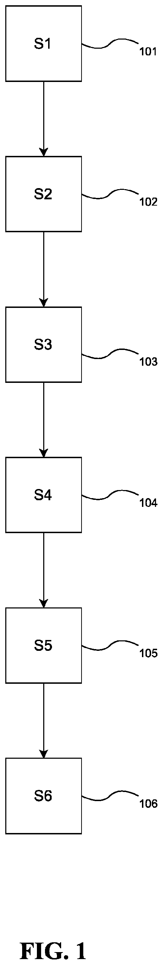

Figure 1 shows a flowchart of a method according to the present invention for analyzing an additive manufacturing (AM) building process of a three-dimensional (3D) product, where the building process comprises alternatively distributing a material on a substrate by a recoating mechanism and subsequently building a layer by means of fusing a portion of the material by a fusing device according to a planned geometry of the 3D product. The distributed material may be, but is not limited to, a metal or metal alloy, any type of plastic and plastic type material, where 3D product is a metal product, plastic product and the like.

In a first step (S1) 101, image data is obtained for each build layer of the 3D product in a high-resolution format. The image data comprise image data of the distributed material before fusing the portion of the material and image data after fusing the portion of the material. Each build layer of all the acquired image data is uniquely identified with a unique identification (ID) code and stored in a high-resolution format.

In a second step (S2) 102, a video stream is generated from the image data and stored.

In a third step (S3) 103, the stored video stream is displayed on a display to a user.

Steps S1-S3 are repeated during the building process where the image data for the most recent build layer or layers are added to the video stream while the building process takes place.

The generated video stream is preferably generated in a low-resolution and/or compressed format. This may be done by compressing the obtained image data into a compressed format and accumulating together the image data in the compressed format. This may also be done by accumulating together the image data to form a first set of a video stream in a high-resolution format and decoding the video stream in the high-resolution format into said video stream in the low-resolution format. This reduces the need for constant downloading of high-resolution data. Thus, having the video streams in said low-resolution and/or compressed format, a general computing device, laptop, portable device may be utilized, where the video stream may be stored in the user's browser memory.

In a fourth step (S4) 104, an image selection command is received from the user from the video stream displayed for the user. The user may as an example slide the video stream back and forth in order to navigate back and forth between build layers like a video-scrubbing while the image data for each build layers where the sliding occurs are displayed, i.e. the image data before fusing the portion of the material and image data after fusing the portion of the material are shown, where the displayed image data during the sliding are in an embodiment displayed in a low-resolution format. If the user as an example identifies a potential failure in a given build layer or layers during the sliding, he can take a closer look at the particular layer by selecting that particular build layer.

In a fifth step (S5) 105, in response to the image selection command, the unique ID code of the image selected from the video stream is identified.

In a sixth step (S6) 106, the identified unique ID code is utilized in extracting and presenting the stored image data in a high-resolution format.

The generated video stream preferably comprises a first video stream of the image data of the distributed material before fusing the portion of the material and a second video stream of the image data of the built layer, wherein the step of displaying comprises displaying the first and the second video streams parallel and simultaneously such that each displayed image frame at any instant of time displays the images corresponding to the same build layer.

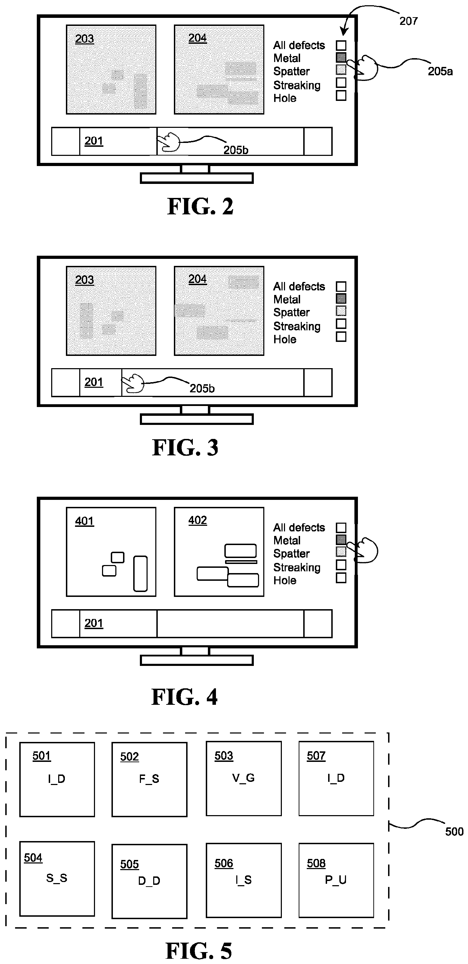

Figure 2 illustrates graphically a video stream 201 and where the first and the second video streams mentioned above are played parallel 203, 204, where, as already mentioned, the first video stream 203 of the image data of the distributed material before fusing the portion of the material and a second video stream 204 of the image data of the built layer, where the video streams 203, 204 are in a low-resolution and/or compressed format. The video stream may be focused on certain potential defects during the build that the user 205a,b may be monitoring, where different potential defects 207 may be selected by the user 205a vie e.g. a touch button command. This may be done by compressing the obtained image data into a compressed format and accumulating together the image data in the compressed format.

Figure 3 depicts graphically where the user has scrolled back to a previous build layer, and Figure 4 depicts graphically where the user 205 has released the touch screen and in that way made an image selection command. This selection triggers image pairs for the selected build layer in a high-resolution format 401, 402 for the selected build layer that are displayed, where the image on the left 401 is the image data for the selected build layer of the distributed material before fusing the portion of the material and the image data on the right 402 is the image data of the same build layer after fusing a portion of the material.

Figure 5 depicts a block diagram of a system 500 according to the present invention for analyzing an additive manufacturing (AM) building process of a three-dimensional (3D) product, where the building process comprises alternatively distributing a material on a substrate by a recoating mechanism and subsequently building a layer by means of fusing a portion of the material by a fusing device according to a planned geometry of the 3D product. The system 500 comprises an imaging device (I_D) 501, a first storage device (F_S) 502, a video generator (V_G) 503, a second storage device (S_S) 504, a display device (D_D) 505. The imaging device is configured for generating an image data for each build layer of the 3D product in a high-resolution format, where the image data comprise image data of the distributed material before fusing the portion of the material and image data after fusing the portion of the material, where each build layer of all the acquired image data are uniquely identified with a unique identification (ID). The first storage device is configured for storing the image data in a high-resolution format, the video generator comprises a processor and is configured for processing the obtained image data and generating a video stream. The second storage device is configured for storing the generated video stream and the display device is configured to display the stored video stream as illustrated previously in relation to Figures 2 to 4.

The system further comprises an image selection mechanism (I_S) 506, an image identifier (I_D) 507 and a processing unit (P_U) 508.

The image selection mechanism is configured for receiving an image selection command from a user from the video stream displayed for the user, the image identifier is configured for identifying, in response to the image selection command, the unique ID code of the image selected from the video stream, and the processing unit for utilizing the identified unique ID code in extracting the image data from the first storage device and displaying the extracted image data in a high-resolution format.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A method for analyzing an additive manufacturing (AM) building process of a three-dimensional (3D) product, where the building process comprises alternatively distributing a material on a substrate by a recoating mechanism and subsequently building a layer by means of fusing a portion of the material by a fusing device according to a planned geometry of the 3D product, the method comprising:
A. obtaining image data for each build layer of the 3D product in a high-resolution format, where the image data comprise image data of the distributed material before fusing the portion of the material and image data after fusing the portion of the material, where each build layer of all the acquired image data are uniquely identified with a unique identification (ID) code and stored in a high-resolution format,
B. generating a video stream from the image,
C. storing the generated video stream, and
D. displaying the stored video stream,
wherein steps A. to D. are repeated during the building process where the image data for the most recent build layer or layers are added to the video stream while the building process takes place, where the method further comprises:
▪ receiving an image selection command from a user from the video stream displayed for the user,
▪ identifying in response to the image selection command, the unique ID code of the image selected from the video stream, and
▪ utilizing the identified unique ID code in extracting and presenting the stored image data in a high-resolution format.

2. The method according to claim 1, wherein the generated video stream is generated in a low-resolution and/or compressed format.

3. The method according to claim 2, wherein the step of generating the video stream in the low-resolution and/or compressed format comprises:
• compressing the obtained image data into a compressed format, and
• accumulating together the image data in the compressed format.

4. The method according to claim 2, wherein the step of generating the video stream in the low-resolution format comprises:
• accumulating together the image data to form a first set of video stream in a high-resolution format, and
• decoding the video stream in the high-resolution format into said video stream in the low-resolution format.

5. The method according to any of the preceding claims, wherein the generated video stream comprises a first video stream of the image data of the distributed material before fusing the portion of the material and a second video stream of the image data of the built layer, wherein the step of displaying comprises displaying the first and the second video streams parallel and simultaneously such that each displayed image frame at any instant of time displays the image corresponding to the same build layer.

6. The method according to any of the claims 2 to 5, further comprising allowing the user to slide the video stream back and forth in order to navigate back and forth between build layers while the image data for each build layer where the sliding occurs are displayed.

7. The method according to claim 6, wherein the displayed image data during the sliding are displayed in a low-resolution format.

8. The method according to claim 6 or 7, wherein the image selection command is triggered for the build layer position within the video stream where the sliding of the video stream is terminated.

9. A system for analyzing an additive manufacturing (AM) building process of a three-dimensional (3D) product, where the building process comprises alternatively distributing a material on a substrate by a recoating mechanism and subsequently building a layer by means of fusing a portion of the material by a fusing device according to a planned geometry of the 3D product, the system comprising:
A. an imaging device for generating an image data for each build layer of the 3D product in a high-resolution format, where the image data comprise image data of the distributed material before fusing the portion of the material and image data after fusing the portion of the material, where each build layer of all the acquired image data are uniquely identified with a unique identification (ID),
B. a first storage device for storing the image data in a high-resolution format,
C. a video generator comprising a processor for processing the obtained image data and generate a video stream,
D. a second storage device for storing the generated video stream,
E. a display device for displaying the stored video stream,
wherein steps A. to E. are continuously repeated during the building process where the image data for the most recent build layer are added to the video stream while the building process takes place, where the system further comprises:
▪ an image selection mechanism for receiving an image selection command from a user from the video stream displayed for the user,
▪ an image identifier for identifying, in response to the image selection command, the unique ID code of the image selected from the video stream, and
▪ a processing unit for utilizing the identified unique ID code in extracting the image data from the first storage device and displaying the extracted image data in a high-resolution format.

10. The system according to claim 9, wherein the video generator is configured to generate the video stream in a low-resolution and/or compressed format.

11. The system according to claim 9 or 10, wherein the image selection mechanism comprising a slider device configured to be operated by a user for allowing the user to slide the video stream back and forth in order to navigate back and forth between build layers, where the extracted image data comprises the image data for the build layer position within the video stream where the slider device is released by the user.

12. The system according to any of the claims 9 to 11, wherein the second storage device comprises the user device memory.

13. The system according to any of the claims 9 to 12, wherein the first and the second storage device is the same storage device.

14. The system according to any of the claims 9 to 13, wherein the generated and stored video stream comprises a first video stream of the image data of the distributed material before fusing the portion of the material and a second video stream of the image data of the built layer, wherein the display device is configured to display the first and the second video streams parallel and simultaneously such that each displayed image frame at any instant of time displays the image corresponding to the same build layer.
